# EUROPEAN PATENT SPECIFICATION

(11) **EP 1 001 280 B1**
(45) Date of publication and mention of the grant of the patent: **09.04.2003**
(21) Application number: 99122412.2
(22) Date of filing: 10.11.1999
(51) Int. Cl.: G02B 1/11

(54) **Antistatic multilayer antireflection coating**
Antistatische Mehrfachschichtentspiegelung
Traitement multicouche anti-statique

(30) Priority: 11.11.1998 JP 32087998
(43) Date of publication of application: 17.05.2000
(73) Proprietor: SONY CORPORATION, Tokyo (JP)
(72) Inventor: Araki, Soya, c/o Sony Inazawa Corporation, Inazawa-shi, Aichi-ken (JP)
(74) Representative: Müller - Hoffmann & Partner

(56) References cited:
- US-A- 5 091 244
- US-A- 5 508 091
- US-A- 5 536 580
- US-A- 5 541 770
- US-A- 5 719 705

## Description

### Field of the Invention

The present invention relates to a reflection preventive member for use as a panel glass of a display unit or the like.

### BACKGROUND OF THE INVENTION

Reflection preventive members for use as panel glasses of display units each of which incorporates a cathode ray tube have been required to have conductivity and a light absorbing characteristic owing to wide use of the reflection preventive member made rapidly in recent years. The reason for this lies in that the contrast of a displayed image must be raised and the ergonomics must be improved. In recent years, the cathode ray tube has been formed into a flat shape. Therefore, the thickness of each corner of the panel glass has been enlarged as compared with that of the central portion. As a result, there arises a problem in that the ratio of the brightness of the center portion of the panel glass and that of each corner of the same is raised excessively.

As a conductive and light absorbing reflection preventive member, a member has been known which incorporates a reflection preventive film made of transition metal. For example, a structure has been suggested in Japanese Patent Laid-Open No. 9-156964, the structure incorporating glass/nitride film made of transition metal/transparent film. Another structure has been disclosed in Japanese Patent Laid-Open No. 6-510382, the structure incorporating glass/nitride film made of transition metal/transparent film/nitride film. Another example is disclosed in US 5,541,770. All of the foregoing conductive and light absorbing reflection preventive members are structured to have a reflection preventive function to prevent light made incident on the right side of the reflection preventive film. The reflectance of each of the foregoing conductive and light absorbing reflection preventive members with respect to light made incident on the right side of the reflection preventive film can be raised to a satisfactory level from a viewpoint of practical use.

The reflection preventive member having the multilayered structure incorporating the absorbing film, however, is formed such that the reflectance of the right side and that of the reverse side of the multilayered film are considerably different from each other. Therefore, the reflectance of the conductive and light absorbing reflection preventive member with respect to light made incident on the right side of the multilayered film can considerably be lowered. However, the reflectance with respect to the light made incident on the reverse side of the multilayered film cannot be lowered. When the conductive and light absorbing reflection preventive member is employed as the panel glass of a cathode ray tube, light emitted from the fluorescent surface is reflected by the interface between the panel glass of the cathode ray tube and the film. Thus, the fluorescent surface is again illuminated. As a result, there arises a problem in that the contrast performance of a displayed image and the like deteriorate excessively and, therefore, a duplex image is undesirably displayed.

The reflectance of light made incident on the opposite side of the multilayered film occurs as disclosed in "Thin-Film Optical Filters" H. A. Macleod, McGraw-Hill, 2nd Ed., pp. 65-66 (1989). The foregoing optical filter, however, has a poor reflectance with respect to light made incident on the right side of the multilayered film of about 10 % in a visible ray region. That is, a reflection preventive characteristic has not been obtained from a viewpoint of practical use.

A front plate for use in a usual cathode ray tube or the like has a glass transmittance of about 50 % in the central portion thereof. A light absorptive film having a transmittance of about 75 % is formed on the main surface of the front plate. Thus, the designed total transmittance is about 38 %, causing satisfactory contrast to be obtained. Since the panel glass has the light absorbing characteristic, the transmittance of the corner portions each having a thickness which is larger than that of the central portion by about 14 % is about 92 % of that of the central portion.

On the other hand, the panel glass of a flattened cathode ray tube has the corner portions each having a thickness which is larger than that of the central portion by about 33 %. Therefore, the panel glass suffers from a problem in that the transmittance of each corner is about 82 % of that of the central portion, that is, the transmittance is excessively lowered.

To solve the above-mentioned problems, the light refractive index of the panel glass of the flattened cathode ray tube must be lowered. Moreover, the transmittance of the reflection preventive film formed on the surface of the panel must be lowered. As a result, the ratio of the transmittance of the central portion and that of the corner portion of the panel glass can be raised to about 95 % while the contrast performance in terms of the total transmittance is being maintained. That is, the reflection preventive film of the panel glass of the flattened cathode ray tube or the like must be about 50 % when the transmittance of the panel glass is about 75 %.

However, panel glass of the flattened cathode ray tube or the like has not been known which has a transmittance of about 50 % and conductivity to obtain required contrast performance. Moreover, the panel glass is required to have a restrained reflectance of about 4 % with respect to light transmitted from the opposite side of the multilayered film while the reflection preventive characteristic with respect to light transmitted from the right side of the multilayered film is being maintained.

Therefore, an object of the present invention is to provide a reflection preventive member having conductivity and light absorbing characteristic, capable of lowering the reflectance with respect to light transmitted from the right side of the multilayered reflection preventive film and exhibiting restrained reflectance with respect to light made incident on the opposite side of the multilayered reflection preventive film to perform satisfactory display of an image.

### SUMMARY OF THE INVENTION

A reflection preventive member according to the present invention which is capable of achieving the foregoing object has a five-layer structure comprising a transparent substrate, a first transparent film, a first light absorptive film, a second transparent film, a second light absorptive film and a third transparent film. The first transparent film is made of a transparent material and formed on the main surface of the transparent substrate. The thickness of the first transparent film is 50 nm or smaller. The first light absorptive film is made of a light absorptive material having conductivity and formed on the first transparent film. The first light absorptive film has a thickness of 30 nm adjusted according to a predetermined transmittance. The second transparent film is made of a transparent material and formed on the first light absorptive film. The second light absorptive film is made of a light absorptive material having conductivity and formed on the second transparent film. Moreover, the second light absorptive film has a thickness of 30 nm or smaller adjusted according to a predetermined transmittance. The third transparent film is made of a transparent material and formed on the light absorptive film. The optical thickness of the third transparent film is made to be about 1/4 of the wavelength when the frequency of incident light is about 550 nm. The refractive index of the third transparent film is lower than 1.52 which is lower than the refractive index of the first transparent film and that of the second transparent film.

The reflection preventive member according to the present invention and structured as described above incorporates the first light absorptive film and the second light absorptive film each of which is made of the light absorptive material having conductivity. Therefore, conductivity is imparted to the overall body of the multilayered reflection preventive film. The reflection preventive member has the structure that the thickness of the first light absorptive and that of the second light absorptive are relatively and arbitrarily adjusted. Thus, the transmittance of the reflection preventive member is regulated to satisfy a predetermined transmittance. Therefore, the reflectance of light made incident on both of the right and reverse sides can be lowered, causing the contrast performance to be maintained.

Other objects and advantages of the invention will become apparent upon reading the following detailed description and appended claims, and upon reference to the accompanying drawings.

### BRIEF DESCRIPTION OF THE DRAWINGS

Fig. 1 is a cross sectional view showing an essential portion of a reflection preventive member according to an embodiment of the present invention.

Fig. 2 is a graph showing the relationship between extinction coefficients concerning the absorbing components of the optical constants of TiN and NiVOx and wavelengths.

Fig. 3 is a graph showing the relationship between the reflectance and the wavelengths realized when light has been made incident on the SiO₂ film of a five-layered structure consisting of Air/SiO₂/TiN/Si₃N₄/TiN/Si₃N₄/Glass.

Fig. 4 is a graph showing the relationship between the reflectance and the wavelengths when light has been made incident on the Si₃N₄ film of the reflection preventive member.

Fig. 5 is a graph showing the relationship between the transmittance and wavelengths of the reflection preventive member.

Fig. 6 is a graph showing distribution of chromaticity of right-side reflected light realized when light has been made incident on the SiO₂ film of the reflection preventive member.

Fig. 7 is a graph showing the relationship between the reflectance and the wavelengths realized when light has been made incident on the SiO₂ film of a five-layered structure consisting of Air/SiO₂/NiVOx/Si₃N₄/TiN/Si₃N₄/Glass.

Fig. 8 is a graph showing the relationship between the reflectance and the wavelengths when light has been made incident on the Si₃N₄ film of the reflection preventive member.

Fig. 9 is a graph showing the relationship between the transmittance and wavelengths of the reflection preventive member.

Fig. 10 is a graph showing distribution of chromaticity of right-side reflected light realized when light has been made incident on the SiO₂ film of the reflection preventive member.

Fig. 11 is a graph showing the relationship between the reflectance and the wavelengths realized when light has been made incident on the SiO₂ film of a five-layered structure consisting of Air/SiO₂/TiN/SiN/TiN/SiN/Glass.

Fig. 12 is a graph showing the relationship between the reflectance and the wavelengths realized when light has been made incident on the SiN film of the reflection preventive member.

Fig. 13 is a graph showing the relationship between the transmittance and the wavelengths of the reflection preventive member.

Fig. 14 is a graph showing distribution of chromaticity of right-side reflected light realized when light has been made incident on the SiO₂ film of the reflection preventive member.

It should be understood that the drawings are not necessarily to scale and that the embodiments are sometimes illustrated by graphic symbols, phantom lines, diagrammatic representations and fragmentary views. In certain instances, details which are not necessary for an understanding of the present invention or which render other details difficult to perceive may have been omitted. It should be understood, of course, that the invention is not necessarily limited to the particular embodiments illustrated herein.

### DETAILED DESCRIPTION OF THE PRESENTLY PREFERRED EMBODIMENTS

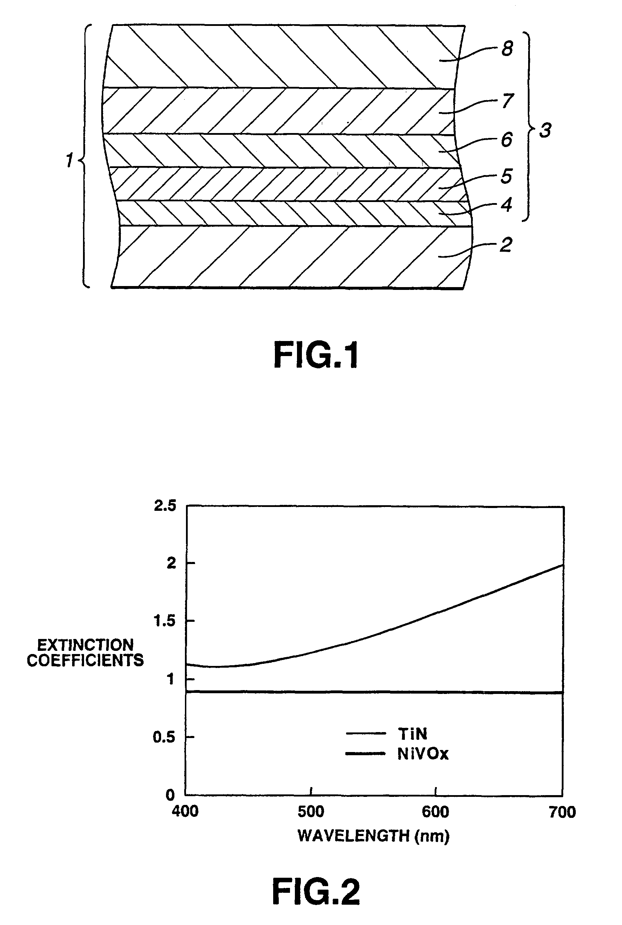

An embodiment of the present invention will now be described with reference to the drawings. A reflection preventive member 1 according to an embodiment of the present invention, as shown in Fig. 1, incorporates a transparent substrate 2 and a reflection preventive film 3 formed on the main surface of the transparent substrate 2. The reflection preventive film 3 is formed into a five-layer structure incorporating a first transparent film 4, a first light absorptive film 5, a second transparent film 6, a second light absorptive film 7 and a third transparent film 8.

The reflection preventive member 1 is employed by, for example, panel glass of a display unit. The transparent substrate 2 is constituted by a glass substrate, a face panel of a CRT, a plastic substrate, a film or the like.

The reflection preventive member 1 has the reflection preventive film 3 which is formed on the transparent substrate 2 by, for example, a sputtering method, a vacuum evaporating method, a chemical gas-phase growing method (a CVD method)or a sol-gel method. In particular, a DC sputtering method has advantages that the thickness can easily be controlled, an advantage can be obtained when a substrate having a large area is processed and lamination of a multilayered film can easily be performed if an in-line type apparatus is employed. Note that the present invention is not limited to the foregoing film forming process.

The first transparent film 4 is made of a transparent material which is transparent in a visible ray region and having a refractive index which is higher than that of the third transparent film 8 to be described later. The first transparent film 4 is formed on the main surface of the transparent substrate 2. Specifically, the first transparent film 4 is made of silicon nitride (Si₃N₄) or the like. the first transparent film 4 may be made of indium tin oxide (ITO) or lead oxide (SnO₂) having a refractive index similar to that of the silicon nitride (Si₃N₄). The first transparent film 4 has an adjusted thickness from the main surface of the transparent substrate 2 which is 50 nm or smaller.

The first light absorptive film 5 is made of metal nitride selected to serve as the light absorptive material having conductivity, Specifically, the first light absorptive film 5 is made of titanium nitride (TiN) and formed on the first transparent film 4. The conductive characteristic of the first light absorptive film 5 and the second light absorptive film 7 imparts conductivity to the reflection preventive film 3 of the reflection preventive member 1. As a result, an antistatic characteristic and a leaked electric-field preventive characteristic can be imparted. The sheet resistance of the surface of the reflection preventive film 3 of the reflection preventive member 1 is 1 KΩ/□ or lower. Note that the expression "1 KΩ/□" indicates a fact that the sheet resistance of the overall surface is 1 KΩ. Hence it follows that the reflection preventive member 1 is able to furthermore reliably exhibit the leaked electric-field preventive characteristic. Note that the first light absorptive film 5 and the second light absorptive film 7 to be described later may be made of nitride of transition metal which is substituted for the titanium nitride. When the first light absorptive film 5 and the second light absorptive film 7 are made of different materials, the distribution of the transmittance can be adjusted. For example, the second light absorptive film 7 to be described later may be a red transparent film having distribution of transmittance in which the transmittance of incident light in a wavelength region longer than 550 nm is raised. As a result, when the reflection preventive member 1 is employed to form the panel glass of a cathode ray tube, the brightness of red light of a displayed image can be raised. Specifically, the second light absorptive film 7 may be made of nickel vanadium oxide (NiVOx). The nickel vanadium oxide (NiVOx) film has optical constants dispersed in a manner different from that of titanium nitride (TiN). To satisfy conditions for preventing reflection, the reflection preventive film 3 has a structure that the thickness of the layers are set to be values from those which are employed when the light absorptive film is constitute by only titanium nitride.

The titanium nitride (TiN) film has bluish distribution of transmittance. On the other hand, the nickel vanadium oxide (NiVOx) film has a reddish distribution of transmittance. Fig. 2 shows results of comparisons between distributions of extinction coefficients (k) concerning the absorbing component among optical constants of the nickel vanadium oxide (NiVOx) and the titanium nitride (TiN). As can be understood from Fig. 2, the k-values of the titanium nitride (TiN) are raised in the long wavelength region. On the other hand, the nickel vanadium oxide (NiVOx) has a constant k-value. Therefore, the tin has a high absorptance of the components in the long wavelength region. Therefore, when the nickel vanadium oxide (NiVOx) is employed to form a film which is transparent with respect to red light, a characteristic for raising the brightness of displayed red image can be realized.

As a result, the transparent color of the reflection preventive member 1 can arbitrarily be controlled by adjusting the thicknesses of the nickel vanadium oxide (NiVOx) and the titanium nitride (TiN).

The thicknesses of the first light absorptive film 5 and the second light absorptive film 7 to be described later are relatively and arbitrarily be adjusted. The thickness of each film is adjusted to be 30 nm or smaller. Thus, the transmittance of the overall body of the reflection preventive film 3 can be adjusted to satisfy a range from 20 % to 80 %.

The second transparent film 6 is made of a transparent material which is transparent in a visible ray region and having a refractive index higher than that of the third transparent film 8 to be described later. The second transparent film 6 is formed on the first light absorptive film 5. Specifically, the second transparent film 6 is made of silicon nitride (Si₃N₄) or the like. The second transparent film 6 may be made of indium tin oxide (ITO) or lead oxide (SnO₂) having a refractive index similar to that of the silicon nitride (Si₃N₄). The thickness of the second transparent film 6 is smaller than the optical thickness of the third transparent film 8 to be described later.

The second light absorptive film 7 is made of metal nitride selected as a light absorptive material having conductivity similarly to the first light absorptive film 5. Specifically, the second light absorptive film 7 is made of titanium nitride (TiN) or the like and formed on the second transparent film 6. The conductivity characteristic of each of the second light absorptive film 7 and the first light absorptive film 5 imparts conductivity to the overall body of the reflection preventive film 3. As a result, the antistatic characteristic and leaked electric-field preventive characteristic can be obtained. The sheet resistance of the surface of the reflection preventive film 3 of the reflection preventive member 1 is 1 kΩ/□ or lower. Hence it follows that the reflection preventive member 1 is able to furthermore reliably exhibit the leaked electric-field preventive characteristic.

The third transparent film 8 is made of a transparent material which is transparent in the visible ray region and which has a refractive index lower than about 1.52 and an optical thickness of about 1/4 of the wavelength when the wavelength is about 550 nm. The third transparent film 8 is formed on the second light absorptive film 7. Thus, the reflectance of right-side incident light made incident on the third transparent film 8 is made to be lowerthan 1 % in a wavelength from 450 nm to 650 nm. Hence it follows that reflection of right-side incident light by the third transparent film 8 can reliably be prevented. As a result, the visibility can be improved.

The reflection preventive film 3 is structured such that the reflectance of right-side incident light made incident on the third transparent film 8 the reverse-side incident light made incident on the transparent substrate 2 and the transmittance of the same satisfy predetermined values. To achieve the foregoing requirement, the thicknesses of the foregoing layers 4 to 8 are determined. Note that the expression "thickness" is the geometric thicknesses of the layers 4 to 8.

The reflection preventive member 1 structured as described above has a structure that the third transparent film 8 serving as the chemical boundary with air has a low refractive index. The second light absorptive film 7 and the first light absorptive film 5 absorb light. Therefore, reflection of incident light made incident on the third transparent film 8 can be prevented.

Moreover, the reflection preventive member 1 has the structure that the first transparent film 4 serving as the optical boundary with the transparent substrate 2 has a low refractive index. Therefore, the first light absorptive film 5 and the second light absorptive film 7 absorb light. Therefore, reflection of incident light made incident on the transparent substrate 2 can be prevented.

When the materials and thicknesses of the foregoing layers of the reflection preventive member 1 are selected, the foregoing characteristics can be satisfied. As a result, the conductive characteristics including the antistatic characteristic and the leaked electric-field preventive characteristic can be realized. Moreover, when the reflection preventive member 1 is employed to form the panel glass of a flattened cathode ray tube, satisfactory contrast can be maintained while excellent brightness ratio between the corner portions and the central portion is being maintained.

### Example 1

A process will now be described with which the following reflection preventive member 1 was manufactured by the method according to the embodiment of the present invention.

| Materials and Structure of Reflection Preventive Member | |
|---|---|
| Transparent Substrate | glass substrate |
| First Transparent Film | Si₃N₄ film (thickness 25 nm) |
| First Light Absorptive Film | TiN film (thickness 18 nm) |
| Second Transparent Film | Si₃N₄ film (thickness 50 nm) |
| Second Light Absorptive Film | TiN film (thickness 12 nm) |
| Third Transparent Film | SiO₂ film (thickness 78 nm) |

The reflection preventive member 1 had the foregoing layers, the thicknesses of which were optimized to make the reflectance to be lowest when the transmittance was about 50 %.

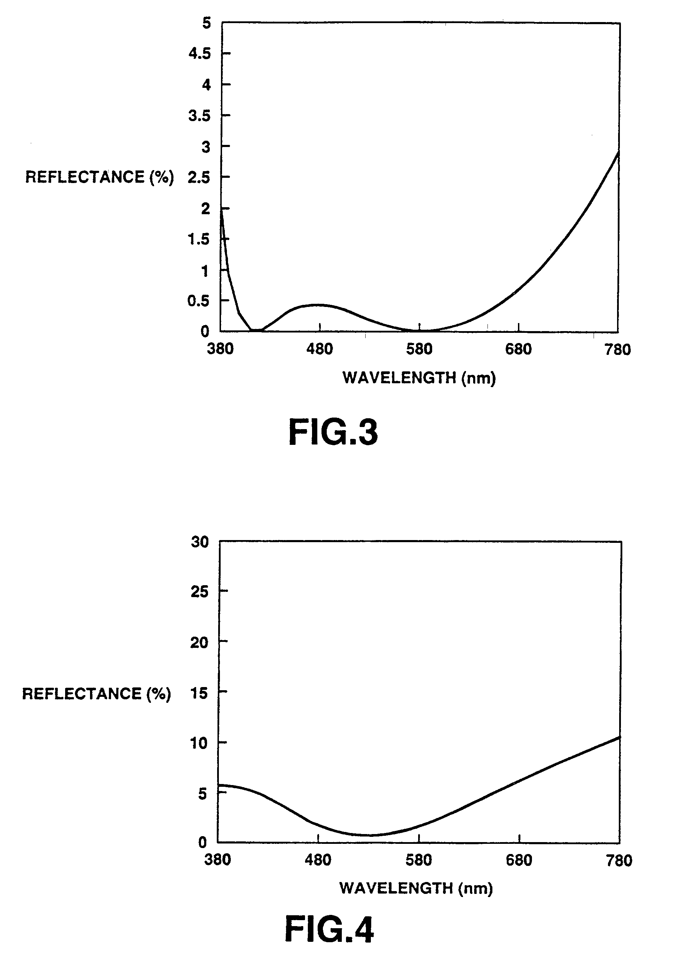

The reflectance characteristic of the reflection preventive member 1 in a case where light was made incident on the third transparent film 8 was such that the highest reflectance was 0.43 %, the mean reflectance was 0.20 % and the visual reflectance was 0.13 % when the wavelength was 480 nm in the visible ray region from 450 nm to 650 nm, as shown in Fig. 3. That is, the reflectance was lower than 1.0 %. Therefore, an excellent reflection preventive characteristic was realized. The reflectance characteristic of the reflection preventive member 1 in a case where light was made incident on the transparent substrate 2 was such that the highest reflectance was 4.8 %, the mean reflectance was 2.2 % and the visual reflectance was 2.0 % in the visible ray region from 450 nm to 650 nm, as shown in Fig. 4. Thus, the reflectance was restrained to a level similar to about 4 % which was the reflectance of glass surface.

The reflectance characteristics shown in Figs. 3 and 4 were obtained in accordance with optical constants of a Si₃N₄ film, a TiN film and a SiO₂ film under the following conditions.

| Conditions Under Which Si₃N₄ Film was Formed: | |
|---|---|
| Forming Method | DC reactive sputtering method |
| Target | silicon |
| Discharge Gas | mixture gas of argon and nitrogen (nitrogen: 30 volume%) |
| Pressure of Sputtering Gas | 0,4 Pa (3 × 10⁻³ Torr) |

| Conditions Under which TiN Film was Formed: | |
|---|---|
| Forming Method | DC reactive sputtering method |
| Target | titanium |
| Discharge Gas | mixture gas of argon and nitrogen (nitrogen: 30 volume%) |
| Pressure of Sputtering Gas | 0,4 Pa (3 × 10⁻³ Torr) |

| Conditions Under which SiO₂ Film was Formed: | |
|---|---|
| Forming Method | DC reactive sputtering method |
| Target | silicon (containing aluminum doped by 10 wt%) |
| Discharge Gas | oxygen |
| Pressure of Sputtering Gas | 0,4 Pa (3 × 10⁻³ Torr) |

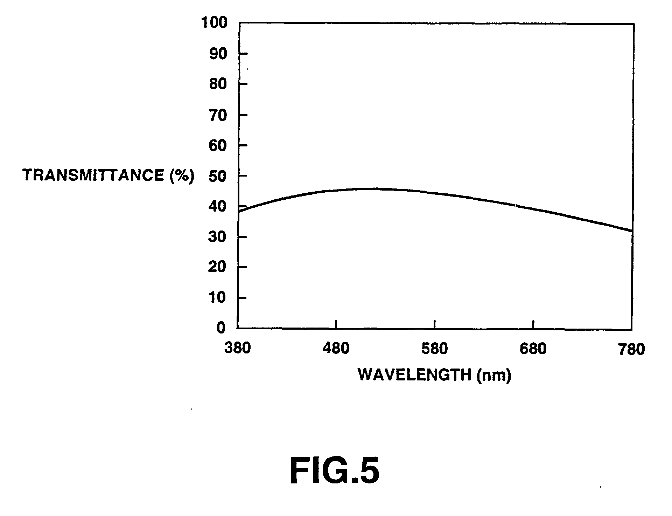

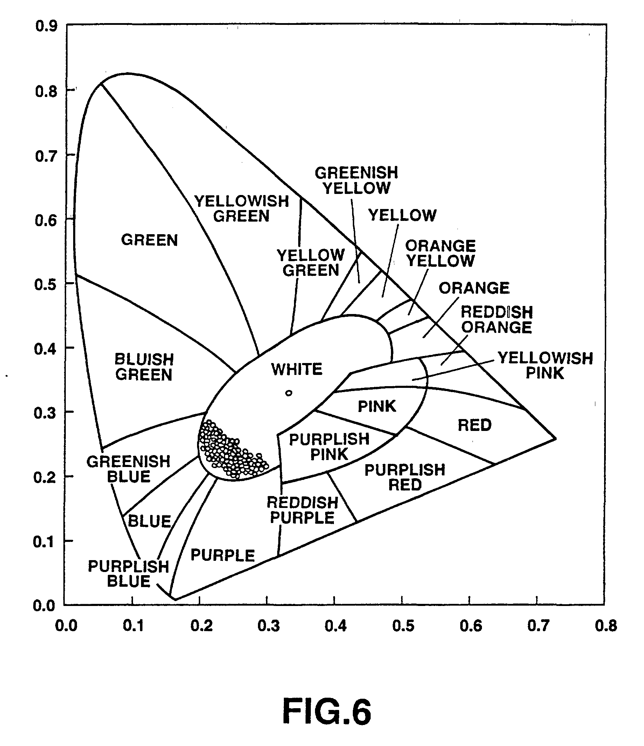

The transmittance characteristic of the reflection preventive member 1 was enabled such that the highest transmittance of the third transparent film 8 was 46 % in the visible ray region of 450 nm to 650 nm when light was made incident on the third transparent film 8, as shown in Fig. 5. Thus, the reflection preventive member 1 was able to maintain a satisfactory brightness ratio between the corner portion and the central portion if the reflection preventive member 1 was employed in the flattened cathode ray tube. The distribution of chromaticity of the third transparent film 8 of the reflection preventive member 1 was bluish distribution of chromaticity of right-side reflected light, as shown in Fig. 6. Fig. 5 is a graph showing transmittance obtained from the reflection preventive film 3 formed on a glass plate having a thickness of 1 mm and no absorptivity. The graph of distribution of chromaticity of right-side reflected light shown in Fig. 6 was a graph of distribution of right-side reflected light realized when the thickness of each layer was scattered in a range of ± 2 %.

On the other hand, the reflection preventive film 1 incorporated the titanium nitride (TiN) film having the conductive characteristic and composed of two layers, the total thickness of was about 30 nm. The surface resistance was about 100 Ω/□ or lower. Thus, a satisfactory leaked electric-field preventive characteristic was obtained.

### Example 2

A process of manufacturing a reflection preventive member incorporating a light absorptive film made of the following nickel vanadium oxide (NiVOx) by the method according to the embodiment of the present invention will now be described.

The reflection preventive member according to this example was different from the reflection preventive member incorporating the light absorptive made of only titanium nitride (TiN) in the material of the second light absorptive film 7.

A process of manufacturing the following reflection preventive member 1 by the method according to the embodiment of the present invention will now be described.

| Materials and Structure of Reflection Preventive Member | |
|---|---|
| Transparent Substrate | glass substrate |
| First Transparent Film | Si₃N₄ film (thickness 25 nm) |
| First Light Absorptive Film | TiN film (thickness 16 nm) |
| Second Transparent Film | Si₃N₄ film (thickness 52 nm) |
| Second Light Absorptive Film | NiVOx film (thickness 12 nm) |
| Third Transparent Film | SiO₂ film (thickness 90 nm) |

The thickness of each layer of the reflection preventive member 1 was optimized such that the reflectance was lowest when the transmittance was about 50 %.

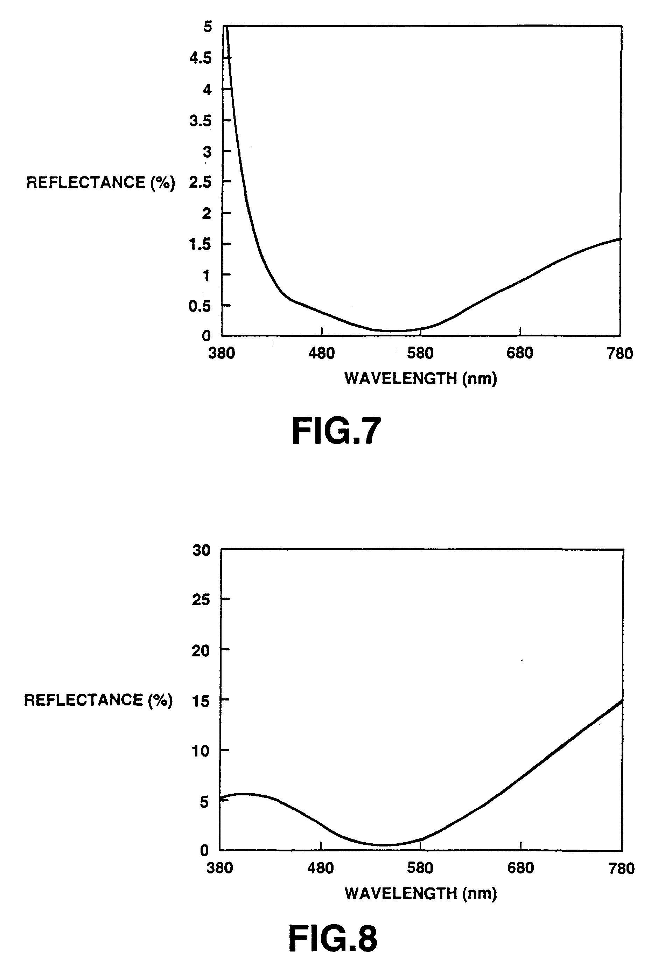

The reflectance characteristic of the reflection preventive member 1 realized when light was made incident on the third transparent film 8 was such that the highest reflectance was 0.70 %, the mean reflectance was 0.30 % and the visual reflectance was 0.20 % when the wavelength was 650 nm in the visible ray region of 450 nm to 650 nm, as shown in Fig. 7. As described above, the reflectance was lower than 1.0 %. Thus, a satisfactory reflection preventive characteristic was realized. The reflectance characteristic of the reflection preventive member 1 realized when light was made incident on the transparent substrate 2 was such that the highest reflectance was 5.51 %, the mean reflectance was 2.30 % and the visible reflectance was 1.3 % in the visible ray region of 450 nm to 650 nm, as shown in Fig. 8. Thus, the reflectance was enabled to be restrained to be about 4 % which was the reflectance of the glass surface.

The reflectance characteristic shown in Figs. 7 and 8 was obtained in accordance with measured optical constants of a Si₃N₄ film, a TiN film, a NiVOx film and a SiO₂ film formed under the following conditions.

| Conditions Under which Si₃N₄ Film was Formed: | |
|---|---|
| Forming Method | DC reactive sputtering method |
| Target | silicon |
| Discharge Gas | mixture gas of argon and nitrogen (nitrogen: 30 volume%) |
| Pressure of Sputtering Gas | 0, 4 Pa (3 × 10⁻³ Torr) |

| Conditions Under which TiN Film was Formed: | |
|---|---|
| Forming Method | DC reactive sputtering method |
| Target | titanium |
| Discharge Gas | mixture gas of argon and nitrogen (nitrogen: 30 volume%) |
| Pressure of Sputtering Gas | 0,4 Pa (3 × 10⁻³ Torr) |

| Conditions Under which NiVOx film was Formed | |
|---|---|
| Forming Method | DC reactive sputtering method |
| Target | nickel-vanadium alloy |
| Discharge Gas | oxygen |
| IPressure of Sputtering Gas | 0,4 Pa (3 × 10⁻³ Torr) |

| Conditions Under which SiO₂ Film was Formed | |
|---|---|
| Forming Method | DC reactive sputtering method |
| Target | silicon (containing aluminum doped in a quantity of 10 wt%) |
| Discharge Gas | oxygen |
| Pressure of Sputtering Gas | 0,4 Pa (3 × 10⁻³ Torr) |

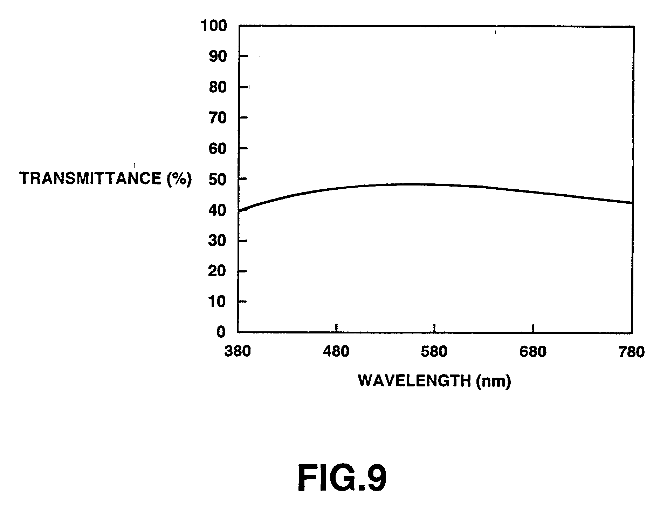

As shown in Fig. 9, the reflection preventive member 1 is able to realize the transmittance such that the highest transmittance of the third transparent film 8 was 48.9 % in the visible ray region from 450 nm to 650 nm when light was made incident on the third transparent film 8. If the reflection preventive member 1 is employed to form the flattened cathode ray tube, a satisfactory ratio of the brightness of the corner portion and that of the central portion can be maintained. As compared with the distribution of transmittance realized with a case in which only titanium nitride (TiN) was employed to form the light absorptive film as shown in Fig. 5, the distribution of the transmittance was improved in a high wavelength range not shorter than 600 nm. That is, the brightness of red light in the distribution of the brightness was improved.

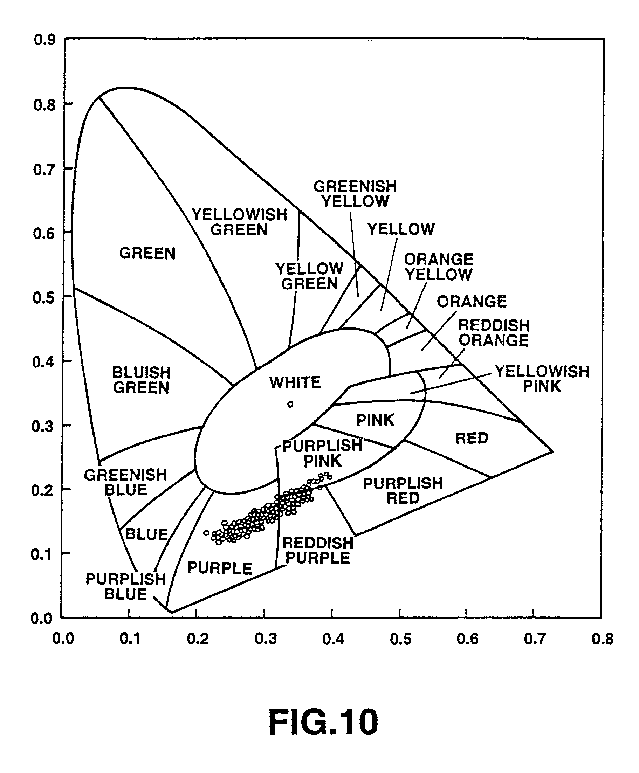

As shown in Fig. 10, the reflection preventive member 1 realized reddish distribution of chromaticity of right-side incident light as compared with the case shown in Fig. 6 where only titanium nitride (TiN) was employed to form the light absorptive film. Note that the transmittance curves were obtained from a structure in which the reflection preventive film 3 was formed on a glass plate having a thickness of 1 mm and no absorptivity. The graph of the chromaticity with respect to right-side reflected light indicated distribution of right-side reflected light which was realized when the thickness of each layer was dispersed in a range of ± 2 %.

On the other hand, the reflection preventive member 1 has the structure that the total thickness of the two layers which were the titanium nitride (TiN) film having a conductive characteristic and the nickel vanadium oxide (NiVOx) film was about 28 nm. The resistance of the surface was about 500 Ω/□ or lower. Therefore, a satisfactory leaked electric-field preventive characteristic can be obtained.

### Example 3

An example will now be described in which a reflection preventive member was manufactured which incorporated the first transparent film and the second transparent film made of the following silicon nitride (SiN) by the method according to the embodiment of the present invention.

Note that the reflection preventive member according to this example was different from the reflection preventive member according to the first example was that the material of the first transparent film and the second transparent film.

An example will now be described in which the following reflection preventive member 1 was manufactured by the method according to the embodiment of the present invention.

| Materials and Structure of Reflection Preventive Member | |
|---|---|
| Transparent Substrate | glass substrate |
| First Transparent Film | SiN film (thickness 48 nm) |
| First Light Absorptive Film | TiN film (thickness 14 nm) |
| Second Transparent Film | SiN film (thickness 55 nm) |
| Second Light Absorptive Film | TiN film (thickness 16 nm) |
| Third Transparent Film | SiO₂ film (thickness 78 nm) |

The reflection preventive member 1 had the foregoing layers, the thicknesses of which were optimized to make the reflectance with respect to light made incident on the transparent substrate 2 to be low.

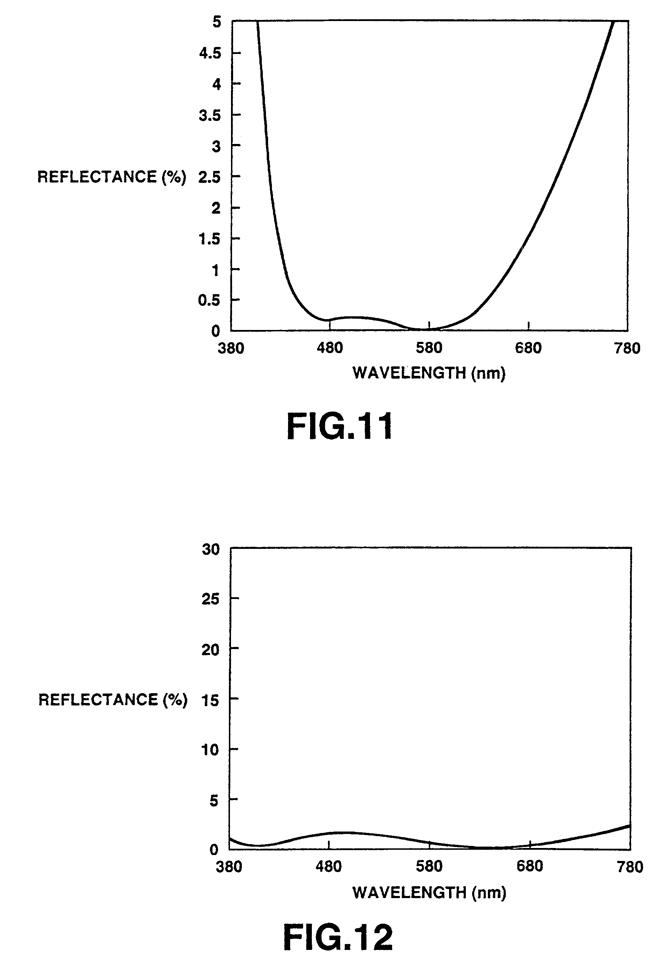

The reflectance characteristic of the reflection preventive member 1 in a case where light was made incident on the third transparent film 8 was such that the highest reflectance was 0.80 %, the mean reflectance was 0.22 % and the visual reflectance was 0.15 % when the wavelength was 650 nm in the visible ray region from 450 nm to 650 nm, as shown in Fig. 11. That is, the reflectance was lower than 1.0 %. Therefore, an excellent reflection preventive characteristic was realized. The reflectance characteristic of the reflection preventive member 1 in a case where light was made incident on the transparent substrate 2 was such that the highest reflectance was 1.68 %, the mean reflectance was 0.92 % and the visual reflectance was 0.87 % % when the wavelength in the visible ray region from 450 nm to 650 nm, as shown in Fig. 12. Thus, the reflectance was restrained to a level similar to about 4 % which was the reflectance of glass surface.

The reflectance characteristics shown in Figs. 11 and 12 were obtained in accordance with optical constants of a SiN film, a TiN film and a SiO₂ film under the following conditions.

| Conditions Under Which SiN Film was Formed: | |
|---|---|
| Forming Method | DC reactive sputtering method |
| Target | silicon |
| Discharge Gas | mixture gas of argon and nitrogen (nitrogen: 30 volume%) |
| Pressure of Sputtering Gas | 0,4 Pa (3 × 10⁻³ Torr) |

| Conditions Under which TiN Film was Formed: | |
|---|---|
| Forming Method | DC reactive sputtering method |
| Target | titanium |
| Discharge Gas | mixture gas of argon and nitrogen (nitrogen: 30 volume%) |
| Pressure of Sputtering Gas | 0,4 Pa (3 × 10⁻³ Torr) |

| Conditions Under which SiO₂ Film was Formed: | |
|---|---|
| Forming Method | DC reactive sputtering method |
| Target | silicon (containing aluminum doped by 10 wt%) |
| Discharge Gas | oxygen |
| Pressure of Sputtering Gas | 0,4 Pa (3 × 10⁻³ Torr) |

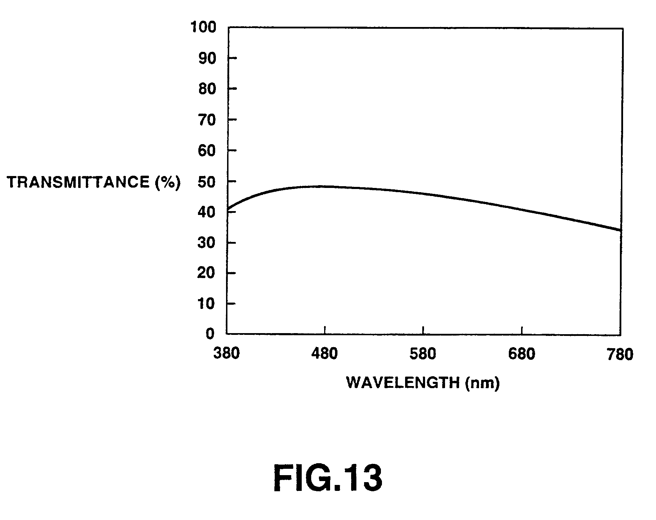

The transmittance characteristic of the reflection preventive member 1 was enabled such that the highest transmittance of the third transparent film 8 was 46.6 % in the visible ray region of 450 nm to 650 nm when light was made incident on the third transparent film 8, as shown in Fig. 13. If the reflection preventive member 1 was employed to form the flattened cathode ray tube, a satisfactory ratio of the brightness of the corner portion and that of the central portion can be maintained.

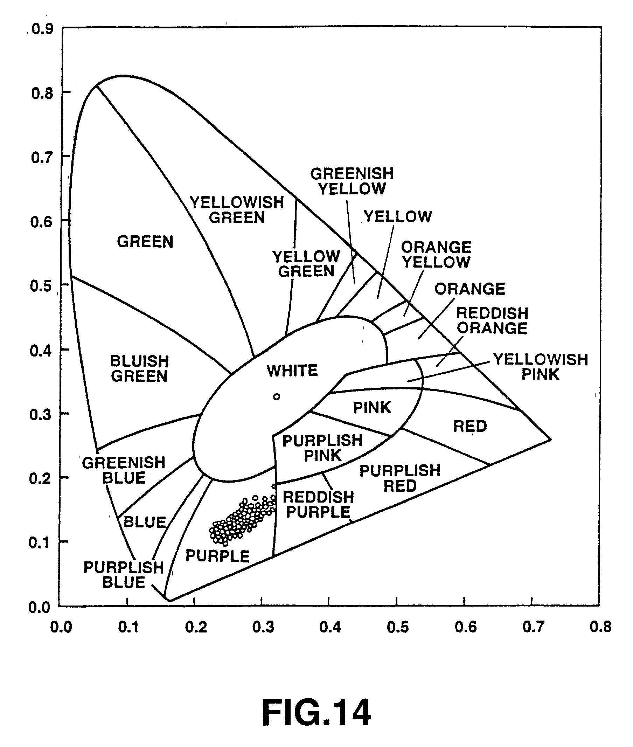

As shown in Fig. 14, the reflection preventive member 1 realized bluish distribution of chromaticity of right-side incident light similarly to the case shown in Fig. 6. Note that the transmittance curves were obtained from a structure in which the reflection preventive film 3 was formed on a glass plate having a thickness of 1 mm and no absorptivity. The graph of the chromaticity with respect to right-side reflected light indicated distribution of right-side reflected light which was realized when the thickness of each layer was dispersed in a range of ± 2 %.

On the other hand, the reflection preventive member 1 had the structure that the total thickness of the two layers of the titanium nitride (TiN) film having a conductive characteristic was about 30 nm. The resistance of the surface was about 500 Ω/□ or lower. Therefore, a satisfactory leaked electric-field preventive characteristic can be obtained.

As described above, the reflection preventive member according to the present invention is composed of the reflection preventive film having the five layers formed on the transparent film substrate and made of the transparent material or the light absorptive material having conductivity. Therefore, the reflectance of light made incident on the two sides of the reflection preventive member and having the wavelength in a predetermined range can be controlled to a low level while the light absorptance of the reflection preventive member is being controlled to a high level. Therefore, the reflection preventive member has the antistatic characteristic and the leaked electric-field preventive characteristic thanks to the conductivity of the reflection preventive film. Moreover, the contrast characteristic can be improved. As a result, an image and so forth can satisfactorily be displayed.

While preferred embodiments of the present invention have been described using specific terms, such description is for illustrative purposes only, and it is to be understood that changes and variations may be made without departing from the spirit or scope of the following claims.

## Claims

1. A conductive reflection preventive member comprising:
a transparent substrate and a multilayered reflection preventive film formed on the substrate, wherein the multilayered reflection preventive film comprises a first transparent film made of a transparent material and formed on the transparent substrate to serve as a first layer having an optical thickness ranging from about 1/8 to about 1/4 of an incident light wavelength of about 550 nm and having a first refractive index;
a first light absorptive film formed on the first transparent film and made of a light absorptive material having conductivity to serve as a second layer having an adjusted thickness of less than or equal to 30 nm;
a second transparent film formed on said first light absorptive film and made of a transparent material to serve as a third layer having an optical thickness of about 1/4 of the incident light wavelength and having a second refractive index;
a second light absorptive film formed on said second transparent film and made of a light absorptive material having conductivity to serve as a fourth layer having an adjusted thickness of less than or equal to 30 nm; and
a third transparent film formed on said second light absorptive film and made of a transparent material to serve as a fifth layer having an optical thickness of about 1/4 of the incident light wavelength and having a third refractive index lower than 1.52 and which is lower than the first refractive index and the second refractive index, **characterised in that**
the reflection preventive member prevents reflection of light made incident on said third transparent film and reverse-side incident light made incident on the transparent substrate.

2. The reflection preventive member of claim 1 with a sheet resistance less than or equal to 1 kΩ for the overall surface.

3. The reflection preventive member of claim 1 wherein the thicknesses of the first light absorptive film and the second light absorptive film are adjusted so that the transmittance of the overall body of the multilayered reflection preventive film is regulated to satisfy a predetermined transmittance.

4. The reflection preventive member of claim 1 wherein the second light absorptive film having transmittance distribution in which the transmittance in a wavelength region not shorter than about 550 nm is raised.

5. The reflection preventive member of claim 1 wherein the multilayered reflection preventive film has a reflection preventive characteristic with which the reflectance with respect to incident light is lower than about 1.0 % in a wavelength region of about 450 nm to about 650 nm.

6. The reflection preventive member of claim 1 wherein the multilayered reflection preventive film has a reflection preventive characteristic with which the reflectance with respect to reverse-side incident light is lower than about 6.0 % in a wavelength region of about 450 nm to about 650 nm.

7. The reflection preventive member of claim 1 wherein the first light absorptive film and the second light absorptive film are made of metal nitride, and the conductivity of the metal nitride films imparts conductivity to the overall body of said multilayered reflection preventive film.

8. The reflection preventive member of claim 7 with a sheet resistance less than or equal to 1 kΩ for the overall surface.

9. The reflection preventive member of claim 7 wherein the thicknesses of said first light absorptive film and said second light absorptive film are relatively and adequately adjusted so that the transmittance of the overall body of the multilayered reflection preventive film is regulated to satisfy a predetermined transmittance.

10. The reflection preventive member of claim 7 wherein the second light absorptive film has a transmittance distribution in which the transmittance in a wavelength region not shorter than about 550 nm is raised.

11. The reflection preventive member of claim 7 wherein the multilayered reflection preventive film has a reflection preventive characteristic in which the reflectance with respect to film side incident light is lower than about 1.0 % in a wavelength region of about 450 nm to about 650 nm.

12. The reflection preventive member of claim 7 wherein the multilayered reflection preventive film has a reflection preventive characteristic in which the reflectance with respect to reverse-side incident light is lower than about 6.0 % in a wavelength region of about 450 nm to about 650 nm.

## Patentansprüche

1. Leitendes, entspiegeltes Element, mit:
- einem transparenten Substrat und einem auf diesem hergestellten mehrschichtigen Entspiegelungsfilm, der über einen ersten transparenten Film aus einem transparenten Material verfügt, der auf dem transparenten Material hergestellt ist, um als erste Schicht mit einer optischen Dicke im Bereich von ungefähr 1/8 bis ungefähr 1/4 der Wellenlänge einfallenden Lichts von ungefähr 550 nm zu dienen, und der einen ersten Brechungsindex aufweist;
- einem ersten Lichtabsorptionsfilm, der auf dem ersten transparenten Film hergestellt ist und aus einem Licht absorbierenden Material mit Leitfähigkeit besteht, um als zweite Schicht mit einer eingestellten Dicke von 30 nm oder weniger zu dienen;
- einem zweiten transparenten Film, der auf dem ersten Lichtabsorptionsfilm hergestellt ist und aus einem transparenten Material besteht, um als dritte Schicht mit einer optischen Dicke von ungefähr 1/4 der Wellenlänge einfallenden Lichts zu dienen, und der einen zweiten Brechungsindex aufweist;
- einem zweiten Lichtabsorptionsfilm, der auf dem zweiten transparenten Film hergestellt ist und aus einem Licht absorbierenden Material mit Leitfähigkeit besteht, um als vierte Schicht mit einer eingestellten Dicke von 30 nm oder weniger zu dienen; und
- einem dritten transparenten Film, der auf dem zweiten Lichtabsorptionsfilm hergestellt ist und aus einem transparenten Material besteht, um als fünfte Schicht mit einer optischen Dicke von ungefähr 1/4 der Wellenlänge einfallenden Lichts zu dienen, und der einen dritten Brechunsindex unter 1,52 aufweist, der niedriger als der erste und der zweite Brechungsindex ist;
**dadurch gekennzeichnet, dass** das entspiegelte Element die Reflexion von Licht, das auf den dritten transparenten Film fällt, und von auf die Rückseite fallendem Licht, das auf das transparente Substrat fällt, verhindert.

2. Entspiegeltes Element nach Anspruch 1 mit einem Flächenwiderstand, der für die Gesamtfläche 1 kΩ oder weniger beträgt.

3. Entspiegeltes Element nach Anspruch 1, bei dem die Dicken des ersten Lichtabsorptionsfilms und des zweiten Lichtabsorptionsfilms so eingestellt sind, dass das Transmissionsvermögen des gesamten Körpers des mehrschichtigen Entspiegelungsfilms so eingestellt ist, dass es einem vorbestimmten Transmissionsvermögen genügt.

4. Entspiegeltes Element nach Anspruch 1, bei dem der zweite Lichtabsorptionsfilm eine Verteilung des Transmissionsvermögens aufweist, bei der das Transmissionsvermögen in einem Wellenlängenbereich nicht unter 550 nm erhöht ist.

5. Entspiegeltes Element nach Anspruch 1, bei dem der mehrschichtige Entspiegelungsfilm Entspiegelungseigenschaften aufweist, gemäß denen das Reflexionsvermögen für einfallendes Licht im Wellenlängenbereich von ungefähr 450 nm bis ungefähr 650 nm kleiner als ungefähr 1,0 % ist.

6. Entspiegeltes Element nach Anspruch 1, bei dem der mehrschichtige Entspiegelungsfilm Entspiegelungseigenschaften aufweist, gemäß denen das Reflexionsvermögen für auf die Rückseite fallendes Licht im Wellenlängenbereich von ungefähr 450 nm bis ungefähr 650 nm kleiner als ungefähr 6,0 % ist.

7. Entspiegeltes Element nach Anspruch 1, bei dem der erste Lichtabsorptionsfilm und der zweite Lichtabsorptionsfilm aus einem Metallnitrid bestehen und die Leitfähigkeit der Metallnitridfilme dem gesamten Körper des mehrschichtigen Entspiegelungsfilms Leitfähigkeit verleiht.

8. Entspiegeltes Element nach Anspruch 7 mit einem Flächenwiderstand, der für die Gesamtfläche 1 kΩ oder weniger beträgt.

9. Entspiegeltes Element nach Anspruch 7, bei dem die Dicken des ersten Lichtabsorptionsfilms und des zweiten Lichtabsorptionsfilms so relativ und angemessen eingestellt sind, dass das Transmissionsvermögen des gesamten Körpers des mehrschichtigen Entspiegelungsfilms so eingestellt ist, dass es einem vorbestimmten Transmissionsvermögen genügt.

10. Entspiegeltes Element nach Anspruch 7, bei dem der zweite Lichtabsorptionsfilm eine Verteilung des Transmissionsvermögens aufweist, bei der das Transmissionsvermögen in einem Wellenlängenbereich nicht unter 550 nm erhöht ist.

11. Entspiegeltes Element nach Anspruch 7, bei dem der mehrschichtige Entspiegelungsfilm Entspiegelungseigenschaften aufweist, gemäß denen das Reflexionsvermögen für auf die Filmseite fallendes Licht im Wellenlängenbereich von ungefähr 450 nm bis ungefähr 650 nm kleiner als ungefähr 1,0 % ist.

12. Entspiegeltes Element nach Anspruch 7, bei dem der mehrschichtige Entspiegelungsfilm Entspiegelungseigenschaften aufweist, gemäß denen das Reflexionsvermögen für auf die Rückseite fallendes Licht im Wellenlängenbereich von ungefähr 450 nm bis ungefähr 650 nm kleiner als ungefähr 6,0 % ist.

## Revendications

1. Élément conducteur anti-réflexion comprenant :
un substrat transparent et un film anti-réflexion multicouche formé sur le substrat, où le film anti-réflexion multicouche comprend un premier film transparent fait d'un matériau transparent et formé sur le substrat transparent pour servir comme première couche ayant une épaisseur optique s'étendant à partir d'environ 1/8 à environ 1/4 de la longueur d'onde de la lumière incidente à environ 550 nm et ayant un premier indice de réfraction ;
un premier film d'absorption de lumière formé sur le premier film transparent et fait d'un matériau absorbant la lumière ayant une conductivité pour servir comme seconde couche ayant une épaisseur ajustée inférieure ou égale à 30 nm.
un second film transparent formé sur ladite première couche d'absorption de lumière et fait d'un matériau transparent pour servir comme troisième couche ayant une épaisseur optique d'environ 1/4 de la longueur d'onde de la lumière incidente et ayant un second indice de réfraction ;
un second film d'absorption de lumière formé sur ledit second film transparent et fait d'un matériau d'absorption de lumière ayant une conductivité pour servir comme quatrième couche ayant une épaisseur ajustée inférieure ou égale à 30 nm ; et
un troisième film transparent formé sur ledit second film d'absorption de lumière et fait d'un matériau transparent pour servir comme cinquième couche ayant une épaisseur optique d'environ 1/4 de la longueur d'onde de lumière incidente et ayant un troisième indice de réfraction inférieur à 1,52 et qui est inférieur au premier indice de réfraction et au second indice de réfraction, **caractérisé en ce que**
l'élément anti-réflexion empêche la réflexion de la lumière incidente sur ledit troisième film transparent et la lumière incidente du côté inverse rendue incidente sur le substrat transparent.

2. Élément anti-réflexion selon la revendication 1 avec une résistance de feuille inférieure ou égale à 1 kΩ pour la surface globale.

3. Élément anti-réflexion selon la revendication 1 dans lequel les épaisseurs du premier film d'absorption de lumière et du second film d'absorption de lumière sont ajustées pour que le facteur de transmission du corps général du film anti-réflexion multicouche soit régulé pour satisfaire un facteur de transmission prédéterminé.

4. Élément anti-réflexion selon la revendication 1 dans lequel le second film d'absorption de lumière ayant une distribution du facteur de transmission dans lequel le facteur de transmission dans une zone de longueur d'onde pas plus courte qu'environ 550 nm est augmenté.

5. Élément anti-réflexion selon la revendication 1 dans lequel le film anti-réflexion multicouche a une caractéristique anti-réflexion avec laquelle le facteur de réflexion par rapport à la lumière incidente est inférieure à environ 1,0 % dans la zone de longueur d'environ 450 nm à environ 650 nm.

6. Élément anti-réflexion selon la revendication 1 dans lequel le film anti-réflexion multicouche a une caractéristique anti-réflexion avec laquelle le facteur de réflexion par rapport à la lumière incidente du côté inverse est inférieur à environ 6,0% dans une zone de longueur d'onde d'environ 450 nm à environ 650 nm.

7. Élément anti-réflexion selon la revendication 1 dans lequel le premier film d'absorption de lumière et le second film d'absorption de lumière sont faits d'un nitrure de métal, et la conductivité des films de nitrure de métal affecte la conductivité du corps global dudit film anti-réflexion multicouche.

8. Élément anti-réflexion selon la revendication 7 avec une résistance de feuille inférieure ou égale à 1 kΩ pour la surface globale.

9. Élément anti-réflexion selon la revendication 7 dans lequel les épaisseurs dudit premier film d'absorption de lumière et dudit second film d'absorption de lumière sont relativement et adéquatement ajustées pour que le facteur de transmission du corps global du film anti-réflexion multicouche soit régulé pour satisfaire un facteur de transmission prédéterminé.

10. Élément anti-réflexion selon la revendication 7 dans lequel le second film d'absorption de lumière a une distribution du facteur de transmission où le facteur de transmission dans une zone de longueur d'onde pas plus courte qu'environ 550 nm est augmenté.

11. Élément anti-réflexion selon la revendication 7 dans lequel le film anti-réflexion multicouche a une caractéristique anti-réflexion où le facteur de réflexion par rapport à la lumière incidente du côté du film est inférieur à environ 1,0% dans une zone de longueur d'onde d'environ 450 nm à environ 650 nm.

12. Élément anti-réflexion selon la revendication 7 dans lequel le film anti-réflexion multicouche a une caractéristique anti-réflexion dans laquelle le facteur de réflexion par rapport à la lumière incidente du côté inverse est inférieur à environ 6,0 % dans une zone de longueur d'onde d'environ 450 nm à environ 650 nm.
